# EUROPÄISCHE PATENTSCHRIFT

(11) **EP 1 337 342 B1**
(45) Veröffentlichungstag und Bekanntmachung des Hinweises auf die Patenterteilung: **25.01.2006**
(21) Anmeldenummer: 01998404.6
(22) Anmeldetag: 28.11.2001
(51) Int. Cl.: B03C 5/02, G01N 15/10

(54) **MIKROSYSTEM ZUR DIELEKTRISCHEN UND OPTISCHEN MANIPULIERUNG VON PARTIKELN**
MICROSYSTEM FOR THE DIELECTRIC AND OPTICAL MANIPULATION OF PARTICLES
MICROSYSTEME PERMETTANT LA MANIPULATION DIELECTRIQUE ET THERMIQUE DE PARTICULES

(30) Priorität: 29.11.2000 DE 10059152
(43) Veröffentlichungstag der Anmeldung: 27.08.2003
(73) Patentinhaber: Evotec OAI AG, 22525 Hamburg (DE)
(72) Erfinder: MÜLLER, Torsten, 12439 Berlin (DE); SCHNELLE, Thomas, 10243 Berlin (DE); FUHR, Günter, 13187 Berlin (DE)
(74) Vertreter: Hertz, Oliver
(86) Internationale Anmeldenummer: PCT/EP2001/013901
(87) Internationale Veröffentlichungsnummer: WO 2002/043870

(56) Entgegenhaltungen:
- US-A- 5 100 627
- US-A- 6 074 605

## Beschreibung

Die Erfindung betrifft ein Mikrosystem zur dielektrischen und optischen Manipulierung von suspendierten Partikeln, wie z. B. ein fluidisches Mikrosystem zur Vermessung und Bearbeitung von biologischen oder synthetischen Partikeln, und die Verwendung von reflexionsmindernden Materialien in Mikrosystemen, die zur Ausübung elektrischer und optischer Feldkräfte auf suspendierte Partikel eingerichtet sind.

Fluidische und flüssigkeitsgefüllte Mikrosysteme besitzen zahlreiche Anwendungen in der Biochemie, Medizin und Biologie, insbesondere zur Analyse und Manipulierung von gelösten Substanzen oder suspendierten Partikeln. Durch die Miniaturisierung und massive Parallelisierung der in Mikrosystemen (oder: Mikrochips) ablaufenden Prozesse ergeben sich besondere Vorteile für die Analyse und Synthese von in hoher kombinatorischer Vielfalt vorliegenden biologischen Makromolekülen (siehe G. H. W. Sanders et al. in Trends in Analytical Chemistry", Band 19/6, 2000, Seite 364 ff; W. Ehrfeld in "Topics in Current Chemistry", Herausgeber A. Manz et al., Band 194, Springer-Verlag, 1998, Seite 233 ff). Anwendungen der fluidischen Mikrosysteme bestehen insbesondere in der Grundlagenforschung, z. B. zur DNA- oder Proteinanalyse, oder auch in der Wirkstoffforschung (kombinatorische Chemie). Weitere Anwendungen ergeben sich bei der Analyse und Manipulierung einzelner biologischer Zellen oder Zellgruppen (siehe G. Fuhr et al. in "Topics in Current Chemistry", Herausgeber A. Manz et al., Band 194, Springer-Verlag, 1998, Seite 83 ff).

Zahlreiche Anwendungen fluidischer Mikrosysteme sind in der Zellbiologie, Medizin, Pharmazie und Biotechnologie darauf gerichtet, suspendierte Partikel unter der Wirkung elektrischer Feldkräfte zu manipulieren (z. B. zu bewerten, zu vermessen, zu trennen, zu bewegen oder zu bearbeiten). Die elektrischen Feldkräfte werden mit Hilfe von Elektrodenanordnungen aus Mikroelektroden erzeugt, die je nach Anwendung und Aufgabenstellung spezifisch angeordnet und geformt sind. Die Mikroelektroden besitzen typische Dimensionen im Mikrometerbereich. Andere Anwendungen von Mikrosystemen sind auf die Erfassung von Eigenschaften biologischer Zellen gerichtet, die in direktem Kontakt mit Mikroelektroden stehen (siehe z. B. I. Giaver et al. in "Proc. Natl. Acad. Sci.", Band 88, 1991, Seite 7896, P. Fromherz et al. in "Science", Band 252, 1991, Seite 1290).

Es besteht ein Interesse, bei der Manipulierung der mikroskopisch kleinen Partikel zusätzliche, von den elektrischen Feldkräften möglichst unabhängige Kräfte einzusetzen. Dies wird beispielsweise von G. Fuhr et al. in "Applied Physics A.", Band 67, 1998, Seite 385 und von Th. Schnelle et al. in "Applied Physics B", Band 70, 2000, Seite 267, beschrieben. In der Zellbiologie und Molekularbiologie werden zunehmend mit sogenannten optischen Pinzetten (Laser-Tweezer) oder mit der UV-Laserstrahlmikrochirurgie an den Partikeln Kräfte eingesetzt, die durch fokussierte Beleuchtung generiert werden (optische Kräfte). Die optische Pinzette (siehe A. Ashkin et al. in "Nature", Band 330, 1987, Seite 769) basiert auf dem folgenden Prinzip. Ein hochfokussierter Laserstrahl wird durch ein Objektiv mit hoher numerischer Apertur (> 1) in einen Wechselwirkungsbereich, der beispielsweise in einem Mikrosystem oder einem anderen Reservoir gegeben ist, eingekoppelt. Mikropartikel und insbesondere biologische Zellen im Größenbereich von einigen 10 nm bis zu einigen 10 µm werden im Fokus gefangen und können mit Verstellung des Laserstrahls bewegt werden. Um die Strahlenbelastung insbesondere des biologischen Materials klein zu halten, werden optische Pinzetten typischerweise bei Wellenlängen im Bereich von 700 nm bis 1064 nm betrieben. Optische Pinzetten werden beispielsweise für Adhäsionsuntersuchungen an Partikeln (siehe G. Fuhr et al. in "Trends in Analytical Chemistry", Band 19/6, 2000, Seite 402, zur Positionierung für Fusions- oder Porationsverfahren an biologischen Zellen (siehe K. Schütze et al. in "Cell. Mol. Biol.", Band 44/5, 1998, Seite 735) und in fluidischen Mikrosystemen mit dielektrischer Partikelmanipulation, wie z. B. dielektrischen Feldkäfigen (G. Fuhr et al., Th. Schnelle et al., siehe oben) oder in Rotationskammern (siehe De Gasperis et al. in "Meas. Sci. Technol.", Band 9, 1998, Seite 518), verwendet.

Das Einstrahlen von Licht erfolgt bei Mikrosystemen nicht nur zu Manipulations-, sondern auch zu Analysezwecken. Es erfolgt beispielsweise eine Einkopplung von Laserlicht, um Fluoreszenzmarker anzuregen oder spektroskopische Messungen an den Partikeln durchzuführen.

Ein generelles Problem bei der Einstrahlung von Licht in Mikrosysteme mit Elektrodenanordnungen besteht darin, dass sich die Elektroden durch die Beleuchtung erwärmen können. Gelangt beispielsweise ein fokussierter Infrarot-Laserstrahl in die Nähe (Mikrometerbereich) oder auf die Oberfläche von Elektroden, so kommt es in Abhängigkeit vom Elektrodenmaterial (insbesondere Absorptions- und Reflexionseigenschaften) zu einem Aufheizen der Elektroden und ggf. sogar zu einer lokalen Ausbildung von Gasblasen (siehe A. Elshabini et al. in "Thin film technology handbook", McGraw-Hill Companies, 1998, ISBN 0-07-019025-9). Besonders starke Absorptionen treten beispielsweise an Materialien wie Titan, Tantal und Platin auf. Mit den Elektroden erwärmt sich auch das angrenzende Medium, wie z. B. die Suspensionsflüssigkeit oder eine adsorbierte Zelle. Dies kann zu massiven Störungen der Funktion des jeweiligen Mikrosystems führen.

Beispielsweise verursacht in fluidischen Mikrosystemen die Erwärmung von Elektroden, die zur dielektrischen Partikelmanipulation mit hochfrequenten elektrischen Spannungen zur Erzeugung hoher Feldgradienten (z. B. 1 kV/m, 1 kHz-10 MHz) beaufschlagt werden, in der Suspensionsflüssigkeit elektrohydrodynamische Strömungen, die die gewünschte Partikelmanipulation durch Zusammenwirkung elektrischer und optischer Feldkräfte behindern oder sogar unmöglich machen. Zusätzlich führt die Bildung von Gasblasen zur Belastung und Zerstörung des Elektrodenmaterials. Es können Stoßwellen induziert werden, die die Zellen unerwünschten Druck- und Strömungseinflüssen aussetzen.

Entsprechende Probleme treten auch in Mikrosystemen auf, in denen die Partikel direkten Elektrodenkontakt besitzen. Es kann zu lokalen Aufheizungen kommen, unter deren Wirkung beispielsweise adsorbierte Zellen absterben.

Aus US 6 074 605 ist eine Elektroporationsvorrichtung bekannt, bei der die Elektroden gekühlt werden. Dabei handelt es sich jedoch nicht um ein fluidisches Mikrosystem in dem erfindungsgemäßen Sinne.

Schließlich ist aus US 5 100 627 ein fluidisches Mikrosystem mit einer Elektrodenanordnung und einer optischen Pinzette bekannt, wobei sich jedoch ebenfalls das Problem einer möglichen Aufheizung der Elektroden durch die Lasereinstrahlung stellt.

Die Aufgabe der Erfindung ist es, ein verbessertes Mikrosystem zur Partikelmanipulierung unter der Wirkung elektrischer und optischer Feldkräfte bereitzustellen, mit dem die Nachteile der herkömmlichen Mikrosysteme überwunden werden und in dem insbesondere unerwünschte Erwärmungen der Elektroden durch eine äußere Bestrahlung vermieden oder vermindert werden. Das erfindungsgemäße Mikrosystem soll ein zuverlässiges Zusammenwirken optischer und elektrischer Feldkräfte auf suspendierte Partikel insbesondere ohne die Ausbildung störender Strömungen ermöglichen.

Diese Aufgabe wird durch ein Mikrosystem und ein Verfahren mit den Merkmalen gemäß Anspruch 1 oder 11 gelöst. Vorteilhafte Ausführungsformen der Erfindung ergeben sich aus den abhängigen Ansprüchen.

Die Grundidee der Erfindung ist es, in einem Mikrosystem, das zur gemeinsamen Ausübung elektrischer und optischer Kräfte auf mikroskopisch kleine Partikel eingerichtet ist, an einer oder mehreren Elektroden, insbesondere an Elektrodenenden, auf die ggf. eingekoppelte elektromagnetische Strahlung (insbesondere Licht) zur Ausübung der elektrischen Kräfte fällt, mindestens eine Kühleinrichtung vorzusehen. Die Kühleinrichtung wird durch eine oder mehreren der folgenden Maßnahmen gebildet. Erstens ist es vorgesehen, mindestens eine Reflektorschicht zur zumindest teilweisen Abschirmung von Elektrodenflächen gegenüber mindestens einem in das Mikrosystem eingekoppelten Lichtstrahl bereitzustellen. Die mindestens eine Reflektorschicht besitzt die vorteilhafte Wirkung, das eine Elektrodenerwärmung durch die Bestrahlung, die durch mindestens eine strahlungsdurchlässige (insbesondere transparente) Wand eingekoppelt wird, vermieden oder so stark vermindert wird, dass Störungen der jeweiligen Funktion des Mikrosystems ausgeschlossen sind. Zweitens kann als Kühleinrichtung eine Wärmeleitschicht vorgesehen sein, über die eine Elektrodenfläche mit einer Wärmesenke, z. B. einer Wand des Mikrosystems, verbunden ist. Drittens kann die Kühleinrichtung durch ein aktives Bauelement gebildet werden (z.B. Peltier-Element), das vorzugsweise in Elektrodennähe im Mikrosystem angeordnet ist.

Das Mikrosystem kann ein fluidisches oder ein flüssigkeitsgefülltes Mikrosystem sein, in dem die erfindungsgemäße Abschirmung von Elektrodenflächen die Ausbildung elektrodynamischer Strömungen verhindert. Das Mikrosystem auch zur Manipulierung suspendierter oder adsorbierter Partikel eingerichtet sein. Im letzteren Fall vermindert die erfindungsgemäße Abschirmung eine unerwünschte Erwärmung z. B. von Zellen, die auf Elektroden adsorbiert sind.

Die mindestens eine Reflektorschicht wird durch das Elektrodenmaterial selbst, durch zusätzliche Deck- und/oder Basisschichten an den Elektroden und/oder Maskierungsschichten an Wänden des Mikrosystems gebildet. Das Material der Reflektorschicht wird anwendungsabhängig so gewählt, dass im interessierenden Wellenlängenbereich des jeweils eingekoppelten Lichts ein hoher Reflexionskoeffizient gegeben ist. Die eingekoppelte Strahlung, insbesondere Laserlicht, dient der Bildung mindestens einer optischen Falle (optische Pinzette) im Mikrosystem oder der Bestrahlung für Beobachtungs- und/oder Messzwecke.

Gemäß bevorzugter Ausführungsformen der Erfindung werden an den Elektroden Maßnahmen getroffen, mit denen eine Erwärmung insbesondere bei Lichteinfall vermieden wird. Hierzu zählen die zumindest teilweise Bildung der Elektroden aus einem Material, das für das eingekoppelte Licht durchlässig (transmittierend) ist und die Bereitstellung von Wärmeleitschichten, mit denen Wärme von den Elektroden an die Umgebung, insbesondere an Wände des Mikrosystems und ggf. in die Suspensionsflüssigkeit, abgeleitet wird.

An der mindestens einen Elektrode des Mikrosystems ist ein Wechselwirkungsbereich aufgespannt, in dem mindestens ein Partikel elektrischen und optischen Kräften ausgesetzt werden soll. Da auch ein fokussierter Laserstrahl einen endlichen Strahlquerschnitt besitzt, kann es zur teilweisen Bestrahlung von Elektroden selbst dann kommen, wenn der Fokus im Wechselwirkungsbereich mit Abstand von den Elektroden (insbesondere Elektrodenenden) eingestellt ist. Ein Gegenstand der Erfindung ist auch die Bereitstellung bestimmter Elektrodenformen, die einerseits die Wirkung der Teilstrahlen vermindern und andererseits eine effektive Ausübung der elektrischen Kräfte im Wechselwirkungsbereich sicherstellen.

Ein weiterer Gegenstand der Erfindung ist die Verwendung von im infraroten Spektralbereich reflektierenden Materialien (insbesondere Metallen, Halbleitern, dielektrischen Zusammensetzungen) zur zumindest einseitigen Abschattung von Elektroden in Mikrosystemen.

Ein weiterer Gegenstand der Erfindung ist ein mit der mindestens eine Kühleinrichtung ausgebildetes Mikrosystem, das mit einer Lichtquelle zur Einkopplung von Manipulierungs- oder Messlicht in das Mikrosystem ausgestattet ist.

Ein weiterer Gegenstand der Erfindung ist ein Verfahren zur Manipulierung und/oder Analyse von Proben mit elektrischen Kräften in einem erfindungsgemäßen fluidischen Mikrosystem.

Ein wesentlicher Vorteil der Erfindung besteht in der erhöhten Funktionssicherheit der Mikrosysteme. Unerwünschte Einflüsse auf die Partikel und/oder die Suspensionsflüssigkeit im Mikrosystem werden vermieden. Im Mikrosystem können die genannten Gasblasenbildungen an den Elektroden ausgeschlossen werden. Die Lebensdauer der Elektroden wird erhöht. Die Empfindlichkeit der Mikrosysteme gegenüber Fehlbedienungen z. B. durch ein versehentliches Fokussieren einer optischen Pinzette auf eine Elektrode wird vermindert.

Weitere Vorteile und Einzelheiten der Erfindung werden aus der folgenden Beschreibung der beigefügten Zeichnungen ersichtlich. Es zeigen:
- Fig. 1:: eine schematische Perspektivansicht eines erfindungsgemäßen Mikrosystems,
- Fig. 2:: eine schematische Seitenansicht eines erfindungsgemäßen Mikrosystems zur Illustration verschiedener Maßnahmen zur Verringerung der Erwärmung von Elektroden,
- Fig. 3-5:: schematische Draufsichten auf Elektrodenanordnungen in einem erfindungsgemäßen Mikrosystem, und
- Fig. 6:: Kurvendarstellungen zur Illustration der Transmission von ITO.

Die Erfindung wird im Folgenden beispielhaft unter Bezug auf ein fluidisch durchströmtes Mikrosystem beschrieben. Die Erfindung ist jedoch auf diese Anwendung nicht beschränkt, sondern ist auch in anderen flüssigkeitsgefüllten Mikrosystemen mit Mikroelektrodenarrays umsetzbar, z. B. auch in Mikrosystemen mit ISFET's zur Analyse von Nervenzellen oder Krebszellen (siehe oben, P. Fromherz et al.) oder in Mikrosystemen zur Untersuchung von Zellspuren oder Zelladsorbaten. Die Herstellung von Mikrosystemen ist an sich bekannt und wird daher im einzelnen hier nicht beschrieben. Die erfindungsgemäße Kühleinrichtung an Elektroden wird vorzugsweise durch mindestens eine abschirmende Reflektorschicht gebildet. Die Reflektorschicht kann eine geschlossene oder auch eine strukturiert unterbrochene Bedeckung des jeweils zu maskierenden Flächenbereiches oder aller zu markierenden Flächenbereiche sein.

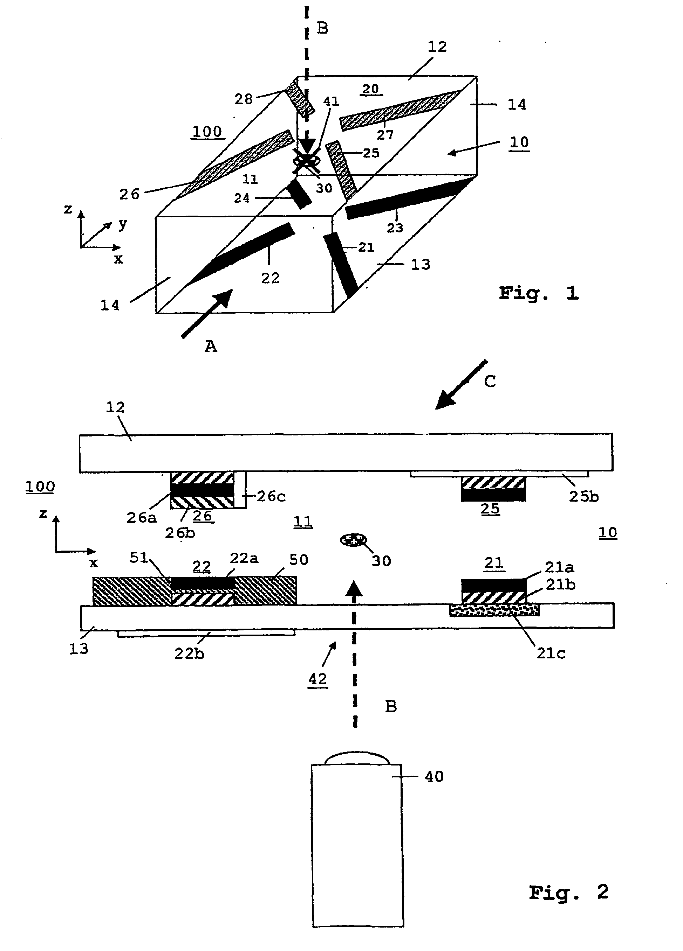

Fig. 1 zeigt in schematischer Perspektivansicht ein Kompartiment 10 eines erfindungsgemäßen Mikrosystems 100. Das Kompartiment 10 ist ein Teil der im Mikrosystem gebildeten Kanal- und Reservoirstruktur und beispielsweise in einem Kanal vorgesehen, der in Pfeilrichtung A von einer Suspensionsflüssigkeit mit suspendierten Partikeln durchströmt werden kann. Seitlich wird das Kompartiment 10 durch Wandstrukturen begrenzt, die hier die Deckfläche 12, die Bodenfläche 13 und die Seitenflächen 14 umfassen. Auf den Deck- und Bodenflächen 12, 13 sind Elektroden 21-28 angeordnet. Die Elektrodenanordnung 20 bildet einen Oktopol, der zur Ausbildung eines dielektrischen Feldkäfigs eingerichtet ist. Hierzu sind die Elektroden 21 bis 28 über (nicht dargestellte) Anschlussleitungen mit einer Steuereinrichtung verbunden, die insbesondere einen Hochfrequenzgenerator zur Ausbildung hochfrequenter elektrischer Spannungen zwischen den Elektroden enthält.

Durch die aufeinander zuweisenden Elektrodenenden wird im Kompartiment 10 ein Wechselwirkungsbereich 11 aufgespannt, in dem gleichzeitig mit den elektrischen Feldkräften auch optische Kräfte ausgeübt werden können. Allgemein wird hier ein Teilbereich des Mikrosystems als Wechselwirkungsbereich bezeichnet, in dem Partikel sowohl elektrischen als auch optischen Kräften ausgesetzt sind. Die Abgrenzung gegenüber der Umgebung im Mikrosystem ist durch die Ausbildung der elektrischen Felder (Feldbarrieren) zwischen Elektroden und optischer Käfige entsprechend dem eingestrahlten Licht gegeben.

Beim dargestellten Beispiel ist die Deckfläche 12 des Kompartiments 10 transparent, so dass entsprechend der Einstrahlrichtung B ein Laserstrahl in den Wechselwirkungsbereich 11 fokussiert werden kann. Ein Partikel 30 wird im Fokus 41 gehalten.

Das in Fig. 1 illustrierte Mikrosystem besitzt beispielsweise Dimensionen wie die von G. Fuhr et al. in "Applied Physics A", Band 67, 1998, Seite 385, beschriebenen Mikrosysteme. Die Kanalbreite (Breite der Boden- und Deckflächen) beträgt beispielsweise 400 µm. Die Kanalhöhe (Höhe der Seitenflächen) beträgt beispielsweise 40 µm. Die Deck- und Bodenflächen 12, 13 bestehen aus Glas und besitzen Dicken von jeweils 170 µm und 500 µm. Die Elektroden 21-28 sind photolitographisch aufgebrachte Streifenelektroden, die um jeweils 90° versetzt an den Deck- und Bodenflächen 12, 13 angeordnet sind. Durch die Deckfläche 12 wird mit einem Laser (λ = 700...1064 nm) in den Wechselwirkungsbereich 11 eingestrahlt. Hierzu wird beispielsweise eine kommerziell verfügbare optische Pinzette (z. B. Diodenlaser oder Nd-YAG-Laser, Hersteller P.A.L.M., Bernried, Deutschland) mit einem Mikroskop Olympus IX 70 verwendet. Das Mikroskop ist mit einem Öl-Immersionsobjektiv (100-fache Vergrößerung, N.A. = 1.3) ausgestattet. Die Laserleistung beträgt am Objektivausgang rund 30 mW.

Im Mikrosystem 100 ist an allen Elektroden 21-28 jeweils mindestens eine Reflektorschicht vorgesehen. Jede Elektrode wird zumindest an ihrem zum Wechselwirkungsbereich 11 weisenden Ende durch die Reflektorschicht gegenüber dem einfallenden Laserstrahl B abgeschirmt. Teilstrahlen oder Teile des Strahlungsfeldes des Laserstrahls B, die auf die Elektroden gerichtet sind, werden von der jeweiligen Reflektorschicht reflektiert. Erfindungsgemäß sind zumindest auf der in Einstrahlrichtung gelegenen Seite der Elektroden Reflektorschichten vorgesehen. Für besondere Bauformen kann aber auch vorgesehen sein, dass zwei- oder allseitig an den Elektroden Reflektorschichten angebracht sind. Dies ist beispielsweise erforderlich, wenn das Mikrosystem zur wahlweisen Bestrahlung durch die Deck- oder Bodenflächen 12, 13 des Kompartiments 10 ausgelegt ist oder auch die Wirkung von Rückreflexionen innerhalb des Mikrosystems, z. B. von der Oberseite der unteren Elektroden 21-24 auf die Unterseite der oberen Elektroden 25-28, ausgeschlossen werden sollen.

Beim in Fig. 1 dargestellten Ausführungsbeispiel bestehen die Elektroden 21-28 selbst aus im infraroten Spektralbereich reflektierendem Material, z. B. Gold, Kupfer oder Aluminium. Die Elektrodenstreifen sind mit einer Dicke von rund 1000 nm bis 1 µm direkt auf den Deck- und Bodenflächen aus Glas aufgebracht.

Ein Test des Mikrosystems 100 erfolgte unter Verwendung von Latex-Beads (Durchmesser 1 µm, Hersteller: Polyscience) als Strömungsmarker und Hefezellen (Durchmesser rund 5 µm, Glutaraldehyd-fixiert), als Fangobjekte mit destilliertem Wasser als Suspensionsflüssigkeit. Bei Ansteuerung der Elektroden 21-28 zur Erzeugung des dielektrischen Feldkäfigs im Rotationsmodus zeigte sich in mikroskopischer Beobachtung, dass das Kompartiment 10 ungestört von den Latex-Beads durchströmt wurde (keine Verwirbelung), während die Hefezellen sicher im dielektrischen Feldkäfig gehalten und im Fokus 41 der optischen Pinzette verschoben werden konnten. Auch bei direkter Bestrahlung der Elektroden erfolgte keine Bildung von Gasblasen.

Weitere Ausführungsbeispiele erfindungsgemäßer Kühleinrichtungen sind in der schematischen Seitenansicht eines Mikrosystems 100 in Fig. 2 illustriert. Die verschiedenen Varianten können gleichzeitig oder einzeln vorgesehen sein.

In der Seitenansicht in Kanallängsrichtung (y-Richtung) sind lediglich die Deck- und Bodenflächen 12, 13 des Kompartiments gezeigt. Die schichtförmige Anbringung der Elektroden 21, 22 und 25, 26 ist schematisch illustriert. Bei der in Fig. 2 dargestellten Ausführungsform ist die Einkoppelung des Laserstrahls B durch die Bodenfläche 13 vorgesehen. Das Bezugszeichen 40 bezeichnet das Objektiv des Mikroskops zur Einkoppelung des Laserstrahls.

Die in Fig. 2 illustrierten Elektroden besitzen einen Mehrschichtaufbau. Beispielsweise besteht die Elektrode 21 aus der Elektrodenschicht 21a und einer Basisschicht 21b (sogenannte "plating base"). Die Dicken der Elektroden- und Basisschichten 21a, 21b betragen beispielsweise 130 nm und 20 nm. Gemäß einer Ausführungsform der Erfindung wird die Basisschicht 21b als Reflektorschicht ausgebildet. Als Material für die Basisschicht wird beispielsweise Gold, Aluminium oder eine dielektrische Zusammensetzung mit einem passenden Brechungsindex verwendet.

Bei der Elektrode 26 ist eine weitere Variante einer Reflektorschicht illustriert. Die Elektrodenschicht 26a trägt auf der zum Kompartiment weisenden Seite eine Deckschicht 26b, die vorzugsweise wie die oben genannte Basisschicht 21b ausgebildet ist. Bei Bereitstellung der reflektierenden Deck- und/oder Basisschichten können die Elektrodenschichten aus einem nicht reflektierenden Material hergestellt sein. Dies ist in Bezug auf die Verwendung von gegebenenfalls teuren oder schwierig prozessierbaren Schichtmaterialien vorteilhaft, da die Deck- und Basisschichten dünner als die Elektrodenschichten ausgeführt werden können.

Die erfindungsgemäße Reflektorschicht kann auch als von den Elektroden unabhängige Maskierung ausgebildet sein. Dies ist bei den Elektroden 22 und 25 illustriert. Als Maskierung ist auf der Seite, von der eine Bestrahlung des Wechselwirkungsbereiches 11 möglich ist, eine Außenschicht 22b oder eine Innenschicht 25b vorgesehen. Die maskierenden Innen- und Außenschichten auf den Deck- oder Bodenflächen 12, 13 besitzen in Einstrahlrichtung B vorzugsweise eine größere Fläche als die jeweils abgeschirmten Elektroden. Die Maskierung kann auch als zusammenhängende Schicht ausgebildet sein, die lediglich ein Eintrittsfenster 42 zur Einkoppelung des Laserstrahls freilässt. Die Innen- und Außenschichten besitzen eine Dicke von z. B. 50...100 nm und bestehen aus einem Material mit hohem Reflexionskoeffizienten.

Fig. 2 illustriert bei Elektrode 22 eine weitere erfindungsgemäße Maßnahme zur Reduzierung der Wärmebelastung von Elektroden. Es ist als Kühleinrichtung eine Wärmeleitschicht 50 vorgesehen, die mit der Elektrodenschicht 22a in thermisch gut leitender Verbindung steht. Die Verbindung erfolgt über die seitlichen Grenzen der Elektroden- und Wärmeleitschichten 22a, 50 oder flächig durch eine dünne Zwischenschicht 51, die aus demselben Material wie die Wärmeleitschicht 50 (z. B. Gold) besteht. Die Wärmeleitschicht 50 und gegebenenfalls die Zwischenschicht 51 sind durch dielektrische Schichten (nicht eingezeichnet) von der Elektrodenschicht 22a elektrisch isoliert.

Für Präzisionsanwendungen oder bei schräger Einstrahlung (Pfeil C) kann es erforderlich sein, dass an den Elektroden auch seitliche Reflektorschichten angebracht sind. Dies ist bei Elektrode 26 mit der Seitenschicht 26c illustriert, die im Wesentlichen wie die Deck- oder Basisschichten 21b, 26b aufgebaut ist.

Bei Elektrode 21 ist als weitere erfindungsgemäße Kühleinrichtung beispielhaft ein in der Bodenfläche 13 angeordnetes Kühlelement 21c gezeigt. Das Kühlelement 21c steht in thermischem Kontakt mit der Elektrode 21 und befindet sich unter dieser oder seitlich versetzt. Das Kühlelement 21c ist bspw. ein Peltier-Element. Alternativ zur Integration in die Bodenfläche 13 kann das Kühlelement 21c auch von außen (nach Art eines Kühlfingers) auf die Wand des Kompartiments aufgesetzt werden.

Abweichend von den in den Fign. 1 und 2 illustrierten Ausführungsformen kann in einem erfindungsgemäßen Mikrosystem die Elektrodenanordnung auch lediglich einseitig auf einer Wand des Kompartiments 10 positioniert sein, während auf der gegenüberliegenden Seite lediglich ein unmetallisiertes Dünnglas vorgesehen ist.

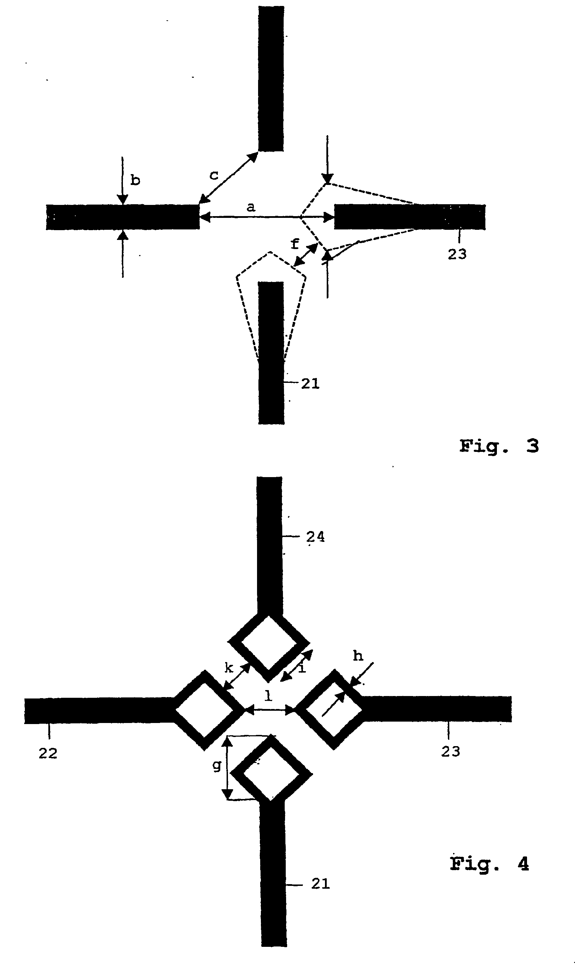

Zur Verminderung der Wärmebelastung der Elektroden kann erfindungsgemäß auch eine Optimierung der geometrischen Eigenschaften der Elektrodenanordnung vorgesehen sein. Dies ist besonders bei Quadrupol- und Oktopol-Elektrodenanordnungen von Interesse. Je kleiner die Elektroden sind und je größer ihr Abstand vom Wechselwirkungsbereich 11 bzw. ihr gegenseitiger Abstand ist, desto geringer ist die teilweise Bestrahlung der Elektrodenenden oder der entsprechenden Reflektorschichten. Allerdings dürfen die Abstände auch nicht zu groß werden, wenn die elektrischen Feldkräfte im Wechselwirkungsbereich effektiv ausgeübt werden sollen. Größere Abstände der Elektroden können nur in gewissen Grenzen durch höhere Spannungen kompensiert werden. Die Erfinder haben festgestellt, dass für typische Anwendungen bei der dielektrischen Manipulation biologischer Partikel bei gleichzeitiger Verwendung optischer Pinzetten unter den o. a. Bedingungen die geometrischen Parameter (Größen, Formen) der Elektroden optimierbar sind. Dies ist in den Figuren 3 und 4 illustriert.

In Fig. 3 ist die Streifenform eines Quadrupols oder einer Elektrodenebene eines Oktopols dargestellt. Optimale Elektrodenparameter betragen für die Elektrodenbreite b 20 ... 25 µm, den Abstand a gegenüberliegende Elektrodenenden 35-45 µm, vorzugsweise 40 µm, und den Abstand c benachbarter Elektroden 20-25 µm. Unter diesen geometrischen Bedingungen ist ein sicheres dielektrisches Halten von Partikeln im dielektrischen Feldkäfig bei geringen lichtinduzierten Strömungen möglich.

Besitzen die Elektroden nicht die rechteckige Streifenform, sondern die bei den Elektroden 21 und 23 gestrichelt eingezeichnete Form mit sich verbreiternden Elektrodenenden, so sind die folgenden Parameterbereiche optimal. Breite des Elektrodenendes d: 30-35 µm, Abstand f benachbarter Elektroden: 15-20 µm, Abstand gegenüberliegender Elektrodenenden (entsprechend a): 35-45 µm, vorzugsweise 40 µm. Damit wird die Funktion des dielektrischen Feldkäfigs gegenüber den streifenförmigen Elektroden noch verbessert.

Eine optimierte Elektrodenform ist in Fig. 4 illustriert. Die zum Wechselwirkungsbereich 11 weisenden Endflächen der Elektroden 21-24 sind durchbrochen als Rahmen aus Elektrodenstreifen gebildet, so dass die in Projektion der Einstrahlrichtung aufgespannte Elektrodenfläche vermindert ist. Die folgenden Parameterbereiche haben sich für ein wirksames dielektrisches Manipulieren von Partikeln im Feldkäfig als optimal erwiesen: Länge g der Endflächen: rund 20 µm, Breite h der Elektrodenstreifen: rund 5-10 µm, Seitenlänge i der Elektrodenstreifen rund 20 µm, senkrechter Abstand k der Rahmen: rund 15 µm, Abstand 1 gegenüberliegender Rahmen: rund 40 µm. Die Ausbildung der Elektrodenenden als durchbrochene Rahmen besitzt den Vorteil, das bei gleichbleibender elektrischer Feldwirkung die effektiv absorbierende Elektrodenfläche verringert ist. Anstelle der gezeigten Rahmenform können die Elektrodenenden auch in Gestalt von Pfeilspitzen gebildet sein.

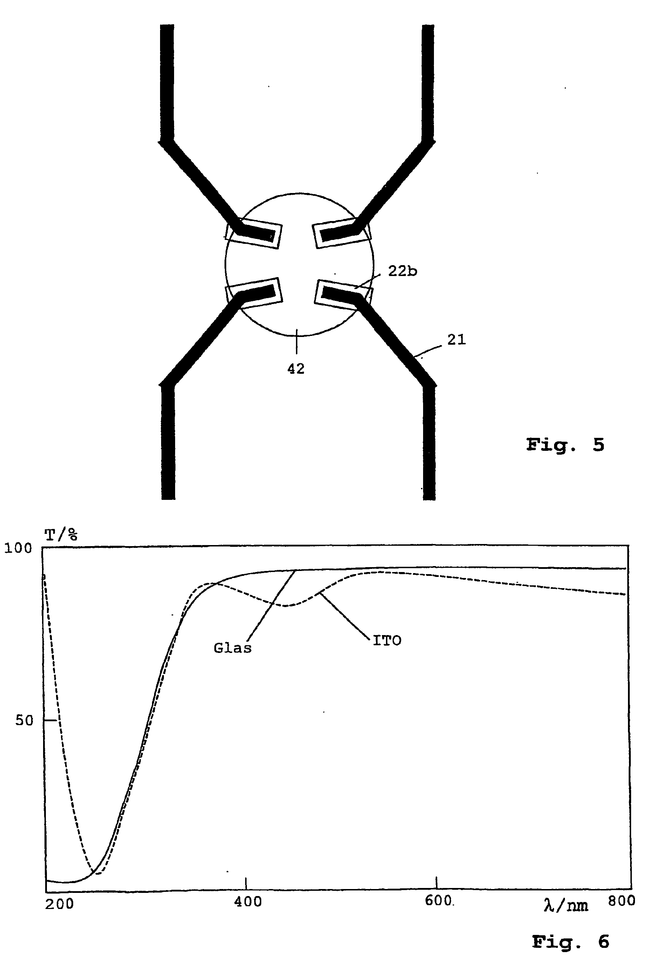

Fig. 5 illustriert die Anordnung von maskierenden Außenschichten 22b (siehe auch Fig. 2) in schematischer Draufsicht. Die Außenschichten 22b sind auf der dem Objektiv zugewandten Seite z. B. der Bodenfläche des Kompartiments angeordnet. Es ist nicht erforderlich, dass die Außenschichten 22b die gesamten Elektroden (z. B. 21) abdecken. Vielmehr ist es ausreichend, wenn eine Abschirmung im Wechselwirkungsbereich gegeben ist, der hier mit dem Kreis 42 umrissen dargestellt ist und in dem das elektrische Feld der Elektroden und der Arbeitsbereich der optischen Pinzette effektiv wirksam sind.

Gemäß einer bevorzugten Ausführungsform der Erfindung werden die Elektroden selbst aus einem im jeweils verwendeten Spektralbereich transmittierenden Material hergestellt. Bei Kombination dielektrischer Feldkäfige mit optischen Pinzetten wird vorzugsweise Indium-Zinn-Oxid (ITO) verwendet, das für Wellenlängen oberhalb 400 nm und insbesondere im infraroten Spektralbereich eine hohe Transmission besitzt, die nahezu dem Transmissionsverlauf von Glas entspricht. Dies ist in den schematischen Kurvendarstellungen gemäß Fig. 6 illustriert.

## Patentansprüche

1. Fluidisches Mikrosystem (100) mit
a) mindestens einem Kompartiment (10) zur Aufnahme und/oder Durchströmung einer Flüssigkeit,
b) einer Elektrodenanordnung (20) im Mikrometerbereich mit einer Vielzahl von Elektroden (21-28), zwischen denen ein Wechselwirkungsbereich (11) gebildet ist,
c) wobei das Kompartiment (10) mindestens eine transparente Wandung (12-14) aufweist, durch die Licht in den Wechselwirkungsbereich (11) entsprechend einer vorbestimmten Einstrahlrichtung (B) einkoppelbar ist,
d) an mindestens einer Elektrode (21-28) eine Kühleinrichtung (21b, 22b, 25b, 26b, 26c, 50, 21c) vorgesehen ist,
**dadurch gekennzeichnet, dass** die Kühleinrichtung umfasst:
e) mindestens eine Reflektorschicht (21b, 22b, 25b, 26b, 26c), mit der die jeweilige Elektrode (21-28) in Bezug auf die Einstrahlrichtung (B) zumindest teilweise abgeschirmt sind, und/oder
f) mindestens eine Wärmeleitschicht (50), über die die jeweilige Elektrode (21-28) mit einer Wand des Kompartiments (10) verbunden ist, und/oder
g) ein aktives Kühlelement (21c) umfasst, das in thermischem Kontakt mit der jeweiligen Elektrode (21-28) angeordnet ist.

2. Fluidisches Mikrosystem gemäß Anspruch 1, bei dem die Reflektorschicht (30) durch die Elektroden selbst, mindestens eine Deckschicht (26b, 26c) auf der dem Kompartiment (10) zugewandten Seite der Elektroden, mindestens eine Basisschicht (21b) auf der einer Wand des Kompartiments (10) zugewandten Seite der Elektroden, oder mindestens eine auf einer Wand des Kompartiments (10) angeordneten Innenschicht (25b) und/oder Außenschicht (22b) gebildet wird.

3. Fluidisches Mikrosystem gemäß Anspruch 2, bei der die Deck- oder Basisschichten in einer Projektionsrichtung parallel zur Einstrahlrichtung (B) die gleiche Form wie die Elektroden besitzen.

4. Fluidisches Mikrosystem gemäß Anspruch 2, bei dem die Innen- oder Außenschichten eine Maske bilden, die in einer Projektionsrichtung parallel zur Einstrahlrichtung (B) mindestens so groß wie die Elektroden ist.

5. Fluidisches Mikrosystem gemäß einem der vorhergehenden Ansprüche, bei dem die mindestens eine Reflektorschicht aus einem Metall oder einer Metalllegierung mit einem Reflexionskoeffizienten im infraroten Spektralbereich gebildet wird, der mindestens so groß wie der Infrarot-Reflexionskoeffizient von Kupfer, Aluminium oder Gold ist.

6. Fluidisches Mikrosystem gemäß einem der Ansprüche 1 bis 4, bei dem die mindestens eine Reflektorschicht durch mindestens eine dielektrische Schicht oder eine Gradientenschicht gebildet wird, die im infraroten Spektralbereich einen Reflexionskoeffizienten besitzt, der mindestens so groß wie der Infrarotkoeffizient von Kupfer, Aluminium oder Gold ist.

7. Fluidisches Mikrosystem gemäß einem der vorhergehenden Ansprüche, bei dem die Elektroden aus einem im infraroten Spektralbereich transparenten Material bestehen.

8. Fluidisches Mikrosystem gemäß Anspruch 7, bei dem die Elektroden aus Indium-Zinn-Oxid (ITO) bestehen.

9. Fluidisches Mikrosystem gemäß einem der vorhergehenden Ansprüche, bei dem außerhalb des Kompartiments (10) eine Lichtquelle mit relativ zum Wechselwirkungsbereich fest eingestellter Einstrahlrichtung (B) angeordnet ist.

10. Fluidisches Mikrosystem gemäß Anspruch 9, bei dem die Lichtquelle ein im infraroten Spektralbereich betriebener Laser ist.

11. Verfahren zur Manipulierung und/oder Analyse von Proben mit elektrischen Kräften in einem fluidischen Mikrosystem (100) mit mindestens einem Kompartiment (10) zur Aufnahme und/oder Durchströmung einer Flüssigkeit und mit einer Elektrodenanordnung (20) im Mikrometerbereich mit mindestens einer Elektrode (21-28), bei der ein Wechselwirkungsbereich (11) gebildet ist, wobei das Kompartiment (10) mindestens eine Wandung (12-14) aufweist, durch die elektromagnetische Strahlung in den Wechselwirkungsbereich (11) entsprechend einer vorbestimmten Einstrahlrichtung (B) eingekoppelt wird, die mindestens eine Elektrode (21-28) mit einer Kühleinrichtung (21b, 22b, 25b, 26b, 26c, 50, 21c) gekühlt wird,
**dadurch gekennzeichnet, dass** die Kühleinrichtung umfasst:
a) mindestens eine Reflektorschicht (21b, 22b, 25b, 26b, 26c), mit der die jeweilige Elektrode (21-28) in Bezug auf die Einstrahlrichtung (B) zumindest teilweise abgeschirmt sind,
b) mindestens eine Wärmeleitschicht (50), über die die jeweilige Elektrode (21-28) mit einer Wand des Kompartiments (10) verbunden ist, und/oder
c) ein aktives Kühlelement (21c) umfasst, das in thermischem Kontakt mit der jeweiligen Elektrode (21-28) angeordnet ist.

12. Verwendung eines Verfahrens oder eines fluidischen Mikrosystems gemäß einem der vorhergehenden Ansprüche zur DNA- oder ProteinAnalyse, in der Wirkstoff-Forschung, in der kombinatorischen Chemie, oder zur Identifizierung und/oder Manipulation von biologischen Zellen.

## Claims

1. Fluidic microsystem (100) with
a) at least one compartment (10) to receive a fluid and/or for the passage of a fluid
b) an electrode array (20) in the micrometre range with a plurality of electrodes (21-28), between which an interaction area (11) is formed,
c) wherein the compartment (10) has at least one transparent wall (12-14), through which light can be coupled into the interaction area (11) in a predetermined direction of incidence (B),
d) a cooling device (21b, 22b, 25b, 26b, 26c, 50, 21c) provided on at least one electrode (21-28),
**characterised in that**
the cooling device comprises:
e) at least one reflector layer (21b, 22b, 25b, 26b, 26c), with which the respective electrode (21-28) is at least partially screened with respect to the direction of incidence (B), and/or
f) at least one heat conducting layer (50), via which the respective electrode (21-28) is connected to a wall of the compartment (10), and/or
g) an active cooling element (21c), which is arranged in thermal contact with the respective electrode (21-28).

2. Fluidic microsystem according to Claim 1, wherein the reflector layer (30) is formed by the electrodes themselves, at least one covering layer (26b, 26c) on the side of the electrodes facing the compartment (10), at least one base layer (21b) on the side of the electrodes facing a wall of the compartment (10), or at least one inside layer (25b) and/or outside layer (22b) arranged on a wall of the compartment (10).

3. Fluidic microsystem according to Claim 2, wherein the covering or base layers have the same shape as the electrodes in a direction of projection parallel to the direction of incidence (B).

4. Fluidic microsystem according to Claim 2, wherein the inside or outside layers form a mask, which is at least as large as the electrodes in a direction of projection parallel to the direction of incidence (B).

5. Fluidic microsystem according to one of the preceding claims, wherein the at least one reflector layer is formed from a metal or a metal alloy with a reflection coefficient in the infrared spectral range, which is at least as high as the infrared reflection coefficient of copper, aluminium or gold.

6. Fluidic microsystem according to one of Claims 1 to 4, wherein the at least one reflector layer is formed by at least one dielectric layer or a gradient layer, which has a reflection coefficient in the infrared spectral range, which is at least as high as the infrared coefficient of copper, aluminium or gold.

7. Fluidic microsystem according to one of the preceding claims, wherein the electrodes are made from a material that is transparent in the infrared spectral range.

8. Fluidic microsystem according to Claim 7, wherein the electrodes are made of indium-doped tin oxide (ITO).

9. Fluidic microsystem according to one of the preceding claims, wherein a light source with a direction of incidence (B) fixedly set relative to the interaction area is arranged outside the compartment (10).

10. Fluidic microsystem according to Claim 9, wherein the light source is a laser operated in the infrared spectral range.

11. Method for the manipulation and/or analysis of samples with electrical forces in a fluidic microsystem (100) with at least one compartment (10) to receive a fluid and/or for the passage of a fluid, and with an electrode array (20) in the micrometre range with at least one electrode (21-28), close to which an interaction area (11) is formed, wherein the compartment (10) has at least one wall (12-14), through which electromagnetic radiation is coupled into the interaction area (11) in a predetermined direction of incidence (B), the at least one electrode (21-28) being cooled with a cooling device (21b, 22b, 25b, 26b, 26c, 50, 21c),
**characterised in that**
the cooling device comprises:
a) at least one reflector layer (21b, 22b, 25b, 26b, 26c), with which the respective electrode (21-28) is at least partially screened with respect to the direction of incidence (B),
b) at least one heat conducting layer (50), via which the respective electrode (21-28) is connected to a wall of the compartment (10), and/or
c) an active cooling element (21c), which is arranged in thermal contact with the respective electrode (21-28).

12. Use of a method or a fluidic microsystem according to one of the preceding claims for DNA or protein analysis, in active ingredient research, in combinatorial chemistry, or for the identification and/or manipulation of biological cells.

## Revendications

1. Microsystème fluidique (100) avec
a) au moins un compartiment (10) pour contenir un liquide et/ou permettre son écoulement,
b) un agencement d'électrodes (20) dans la plage du micromètre avec une pluralité d'électrodes (21-28) entre lesquelles est formée une zone d'interaction (11),
c) dans lequel le compartiment (10) présente au moins une paroi transparente (12-14) à travers laquelle de la lumière peut être injectée dans la zone d'interaction (11) selon une direction de rayonnement prédéterminée (B),
d) il est prévu sur au moins une électrode (21-28) un dispositif refroidisseur (21b, 22b, 25b, 26b, 26c, 50, 21c),
**caractérisé en ce que** le dispositif refroidisseur comprend :
e) au moins une couche réfléchissante (21b, 22b, 25b, 26b, 26c) avec laquelle les différentes électrodes (21-28) sont protégées au moins partiellement par rapport à la direction de rayonnement (B), et/ou
f) au moins une couche thermoconductrice (50) au moyen de laquelle les différentes électrodes (21-28) sont reliées à une paroi du compartiment (10), et/ou
g) un élément refroidisseur actif (21c) qui est agencé en contact thermique avec les différentes électrodes (21-28).

2. Microsystème fluidique selon la revendication 1, dans lequel la couche réfléchissante (30) est formée par les électrodes elles mêmes, par au moins une couche de recouvrement (26b, 26c) sur la face des électrodes tournée vers le compartiment (10), par au moins une couche de base (21b) sur la face des électrodes tournée vers une paroi du compartiment (10) ou par au moins une couche intérieure (25b) et/ou une couche extérieure (22b) disposée sur une paroi du compartiment (10).

3. Microsystème fluidique selon la revendication 2, dans lequel les couches de recouvrement ou de base, vues dans une direction de projection parallèle à la direction du rayonnement (B), ont la même forme que les électrodes.

4. Microsystème fluidique selon la revendication 2, dans lequel les couches intérieures ou extérieures forment un masque qui, vu dans une direction de projection parallèle à la direction du rayonnement (B), est au moins aussi grand que les électrodes.

5. Microsystème fluidique selon l'une des revendications précédentes, dans lequel la au moins une couche réfléchissante est formée à partir d'un métal ou d'un alliage métallique ayant un coefficient de réflexion dans le domaine spectral infrarouge qui est au moins aussi grand que le coefficient de réflexion dans l'infrarouge du cuivre, de l'aluminium ou de l'or.

6. Microsystème fluidique selon l'une des revendications 1 à 4, dans lequel la au moins une couche réfléchissante est formée par au moins une couche diélectrique ou une couche à gradient qui possède dans le domaine spectral infrarouge un coefficient de réflexion qui est au moins aussi grand que le coefficient de réflexion dans l'infrarouge du cuivre, de l'aluminium ou de l'or.

7. Microsystème fluidique selon l'une des revendications précédentes, dans lequel les électrodes sont faites d'un matériau transparent dans le domaine spectral de l'infrarouge.

8. Microsystème fluidique selon la revendication 7, dans lequel les électrodes sont en oxyde d'indium et étain (ITO).

9. Microsystème fluidique selon l'une des revendications précédentes, dans lequel une source de lumière est disposée à l'extérieur du compartiment (10) avec une direction de rayonnement (B) fixe par rapport à la zone d'interaction.

10. Microsystème fluidique selon la revendication 9, dans lequel la source de lumière est un laser fonctionnant dans le domaine spectral de l'infrarouge.

11. Procédé de manipulation et/ou d'analyse d'échantillons avec des forces électriques dans un microsystème fluidique (100), avec au moins un compartiment (10) pour contenir un liquide et/ou permettre son écoulement et avec un agencement d'électrodes (20) dans la plage du micromètre avec au moins une électrode (21-28) dans lequel est formée une zone d'interaction (11), le compartiment (10) présentant au moins une paroi (12-14) à travers laquelle le rayonnement électromagnétique est injecté dans la zone d'interaction (11) selon une direction de rayonnement prédéterminée (B) et au moins une électrode (21-28) est refroidie avec un dispositif refroidisseur (21b, 22b, 25b, 26b, 26c, 50, 21c),
**caractérisé en ce que** le dispositif refroidisseur comprend :
a) au moins une couche réfléchissante (21b, 22b, 25b, 26b, 26c) avec laquelle les différentes électrodes (21-28) sont protégées au moins partiellement par rapport à la direction du rayonnement (B),
b) au moins une couche thermoconductrice (50) au moyen de laquelle les différentes électrodes (21-28) sont reliées à une paroi du compartiment (10), et/ou
c) un élément refroidisseur actif (21c) qui est agencé en contact thermique avec les différentes électrodes (21-28).

12. Utilisation d'un procédé ou d'un microsystème fluidique selon l'une des revendications précédentes pour l'analyse d'ADN ou de protéines, dans la recherche de principes actifs, dans la chimie combinatoire ou pour l'identification et/ou la manipulation de cellules biologiques.
